(19) Europäisches Patentamt
European Patent Office
Office européen des brevets

(11) **EP 4 276 627 A1**

(12) **EUROPEAN PATENT APPLICATION**

(43) Date of publication:
**15.11.2023 Bulletin 2023/46**

(21) Application number: **22305701.9**

(22) Date of filing: **12.05.2022**

(51) International Patent Classification (IPC):
**G06F 11/00** (2006.01)　　　**G06F 11/34** (2006.01)
**G06F 11/30** (2006.01)

(52) Cooperative Patent Classification (CPC):
**G06F 11/3409; G06F 11/008; G06F 11/3452;**
G06F 11/3031; G06F 2201/81

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bull SAS**
**78340 Les Clayes-sous-Bois (FR)**

(72) Inventors:
• **CAPANO, Gloria**
**1004 Lausanne (CH)**
• **PONOMAREV, Evgeniy**
**1206 Geneva (CH)**
• **MICHALEK, Natalia**
**80-299 Gdansk (PL)**

(74) Representative: **Argyma**
**14 Boulevard de Strasbourg**
**31000 Toulouse (FR)**

(54) **ITERATIVE METHOD FOR MONITORING A COMPUTING DEVICE**

(57)　An iterative method for monitoring a computing device characterized by metric data to be monitored, comprising the steps, for each iteration, of collecting (E1) metric data over a predetermined interval of time, detecting (E2) a seasonality pattern of said metric data over said predetermined interval of time, determining (E3) an interval-specific model representing the detected seasonality pattern, calculating (E4) modelled data using said determined model and the collected metric data, comparing (E5) the calculated modelled data with the collected metric data to calculate a score characterizing the difference between the calculated modelled data and the collected metric data, calculating (E6) an anomaly likelihood for each data of the collected metric data using the calculated score, detecting (E7) an anomaly on a data when probability that the value of said data is an anomaly is greater than a predetermined threshold.

FIGURE 5

## Description

**[Field of the invention]**

The field of the invention relates to monitoring of computing devices and, more particularly, to a device and a method for an iterative method, a device and a system for monitoring a computing device.

**[Background of the invention]**

Real-time detection of technical problems in computing processes and services is a major challenge, in particular in Information Technology (IT). In the next years, it is expected an increasing adoption of IT operations driven by data operations and accelerated by the COVID-19 crisis that led to an expansion of remote workforce. An increase in resources is followed by a proportional increase in IT manutention work that takes different flavors. One of them is the monitoring of servers functioning and their applications. The objective of monitoring is to inform the engineers of the IT operations teams if and when an issue is present, ideally before users experience any effect. The most common way of performing monitoring is to collect periodically metrics of interest, such as e.g., CPU total consumption, memory utilization, or filesystem usage on servers, Virtual Machine (VM) instances or other hardware, and to apply threshold values to the collected metrics to make decisions.

In the static monitoring threshold approach, if the value of the metric is above a predefined threshold value for a certain interval of time, an alert is triggered and sent to an engineer that may intervene to check the status of the service and solve eventual problems. The threshold reflects what must be considered as "acceptable performance" and can be adjusted by the IT team to reflect the business criticality of certain servers and/or applications. Many commercial monitoring tools adopt this strategy. However, setting a predefined threshold might lead to some constraints.

First of all, setting a too low threshold leads to an inflation of triggered alerts whose majority would not be related to an actual problem (false positive alerts). The lower the threshold, one might get a higher false-positive / true-positive alerts ratio and a higher absolute number of alerts to analyze.

Secondly, setting a high threshold reduces the false-positive alert number but it would not be able to eradicate them. Also, if a too high threshold is set, true positive alerts might be triggered too late, giving engineers less time to prevent a problem (e.g., if a database is experiencing an increasing number of simultaneous transactions that might cause the system to not accommodate all of them. A too high threshold might warn engineers only when the database is close to a critical situation).

Thirdly, different VMs hosted on the same server might be assigned with the same pre-defined threshold despite their different business applications. It requires extra manual work to set threshold uniquely for each Virtual Machine.

Finally, servers might change the hosted applications, or applications might be used in a different way over time (low flexibility). Hence, static pre-defined thresholds cannot capture these modifications and they need to be manually changed to better reflect the new situation.

Some of these issues can be alleviated by using a dynamic threshold approach which can recognize cyclic patterns of activities. The dynamic thresholds are calculated by anomaly detection algorithms based on historical data. The algorithms define what normal behavior is at a particular time (days, weeks) and an alert is triggered if the evaluated metric bypasses the value expected as normal. Dynamic threshold techniques may reduce false-positive alerts and may attenuate some of the problems derived by the static threshold approach. In general, a dynamic threshold lessens the need for manual setting of thresholds and parameters providing at the same time a smaller false positive/true positive ratio and a decreased risk of imposing a too high threshold value. Nevertheless, dynamic threshold approaches hugely vary according to the anomaly algorithm in use: simpler algorithms require less computation power, but they are based on strong a priori that make them neither too flexible nor too precise (e.g., some anomaly detection techniques expect that a certain percentage of data are anomalous; this percentage depends drastically on the particular use case - server, application - and it cannot be correctly calculated across several IT services).

Other more complex techniques, such as the ones based on deep learning, are computationally very expensive, making them less feasible to be employed for real-time detection of large IT systems. Also, when talking about capturing seasonal (i.e., recurrent) behavior with dynamical threshold, existing techniques require a large amount of historical data, especially in the case of composite cycles (e.g., applications used only during working days, from Monday to Friday, with a break during the weekend). Although dynamical thresholds monitoring tools should be able to detect seasonal cycle, they should also be flexible enough to adapt to changes in the "normal" behavior or in seasonal patterns (e.g., backup day shifts from Monday to Tuesday, or a new application has been installed on the server). At the same time, they should be robust enough to detect malicious applications (e.g., an unexpected application running during holiday) and not learn from them.

In summary, the dynamical threshold approach has several limitations due to the complexity and computation cost correlation, the need for a large amount of historical data, the compromise between catching seasonal cycles and at the same time adjusting to a new normality and the demand of resilience to local changes.

A solution entitled "Unsupervised method for baselining and anomaly detection in time-series data for enterprise systems" (patent US10635563B2) describes the use of several models to predict values of relevant IT operational metrics. This solution implements a statistical approach to historical data to determine the presence of anomalies. Specifically, for prediction, such models as Holt-Winters, ARIMA, and Maximum Concentration Intervals are used. An anomaly event is raised once the value of the monitored metric goes outside of a tolerance interval. Tolerance intervals are calculated statistically on previously acquired data. To perform anomaly detection more precisely, the authors also introduce a seasonality check procedure which allows determining whether there are any periodic patterns present in the data. Once the seasonality period is determined, the data is split into intervals equal to the period. Statistical quantities such as mean and standard deviation are evaluated separately for each interval.

Another solution covering seasonality identification in time series is presented in the document entitled "Unsupervised method for classifying seasonal patterns" (patent US 2020/0258005 A1). The method for seasonality detection proposed by the authors relies on splitting time series of interest into one or several seasonal intervals and calculating correlation coefficients between time adjacent intervals. If thus obtained correlation coefficients are above certain predefined values, then the time series is labelled with respective seasonality.

To determine the presence of seasonality patterns (hourly, daily, weekly etc.), some solutions (described in patent US10635563B2 and patent application US 2020/0258005 A1) employ a rather rigid and not flexible approach based on comparing time-adjacent intervals of data and calculating correlation coefficients. When the correlation coefficients are above certain pre-defined values the presence of respective seasonal patterns is identified. The key drawback of this method is that it is tuned to capture fixed temporal patterns and can struggle to determine non-typical patterns. For example, when the incoming data is composed of periodically appearing daily peaks of different amplitude which are not exactly equally spaced.

Another potential flaw of the proposed approach is the way tolerance intervals are calculated. Once the presence of one or several periodic patterns is detected the data is split into buckets, i.e., intervals, of respective length (hourly/daily/weekly etc.). The statistical quantities such as mean and standard deviation are evaluated for each corresponding bucket separately. For instance, for a time series with an hourly pattern, the tolerance interval for 00:00 - 01:00 hour bucket of day N is calculated based on the statistics acquired for the same 00:00 - 01:00 time window of N-1 previous days. This approach adjusts very slowly to new developing patterns and hence can make wrong predictions whether the incoming data is anomalous or not.

It is therefore an object of the present invention to provide a solution for solving at least partially these drawbacks.

**[Summary of the invention]**

To this end, the present invention concerns an iterative method for monitoring a computing device, said computing device being characterized by metric data to be monitored, said iterative method comprising the steps, for each iteration, of:

- collecting metric data over a predetermined interval of time,

- detecting a seasonality pattern of said metric data over said predetermined interval of time,

- determining an interval-specific model representing the detected seasonality pattern,

- calculating modelled data using said determined model and the collected metric data,

- comparing the calculated modelled data with the collected metric data to calculate a score characterizing the difference between the calculated modelled data and the collected metric data,

- calculating an anomaly likelihood for each data of the collected metric data using the calculated score, said anomaly likelihood being the probability that the value of said data is an anomaly,

- detecting an anomaly on a data when probability that the value of said data is an anomaly is greater than a predetermined threshold.

By updating the model parameters at each iteration, the method according to the invention allows to dynamically adapt the anomaly detection to the changes in metric data. The metric data are not directly compared to static or dynamic thresholds, so that a change in the values of said metric data does not imply a modification of a threshold. The real-time self-adjustable anomaly detection monitoring method according to the invention self-adjusts on real-time to new seasonality patterns and new "normal" behavior and is robust to local variations.

Preferably, the device is a computer or a server or a cluster of computers and/or servers.

According to an embodiment, the modelled data $\hat{y}_{t+h|t}$ is calculated at time (t+h) according to the following formula:

$$\hat{y}_{t+\text{h}|t} = l_t + hb_t + s_{t+\text{h}-m(k+1)}$$

where:

the level $l_t$ at time t is defined as:

$$l_t = \alpha(y_t - s_{t-m}) + (1 - \alpha)(l_{t-1} + b_{t-1})$$

where $\alpha$ is a level coefficient,
the trend component $b_t$ at time t is defined as:

$$b_t = \beta^*(l_t - l_{t-1}) + (1 - \beta^*)b_{t-1}$$

where $\beta$ is a trend coefficient,
the seasonality component is added as follow:

$$s_t = \gamma(y_t - l_{t-1} - b_{t-1}) + (1 - \gamma)s_{t-m}$$

where $\gamma$ is a season coefficient.

Advantageously, wherein the score deviates from the mean of the N previous calculated scores when the anomaly-likelihood function L is below a predetermined threshold, where:

$$L = 1 - \frac{1}{2}\text{erfc}\left(\frac{x-MN}{\sqrt{2}\times STD}\right)$$

and where x is the mean of the n previous calculated scores with N» n, MN is the mean of the N previous calculated scores and STD is the standard deviation of the N previous calculated scores with N » n.

The detection of the seasonality pattern of the metric data over the predetermined interval of time may comprise identifying said seasonality pattern.

The step of detecting the seasonality pattern of said metric data over said predetermined interval of time may comprise retrieving a previously detected pattern or determining a new pattern.

In an embodiment, the seasonality pattern is a simple seasonality pattern consisting of a similar and periodically repeated pattern. In other words, the seasonality pattern is a periodic repetition of a similar peak of values of the data over the interval of time, for example a daily repetition.

In an embodiment, the seasonality pattern is a composite seasonality pattern that comprises a combination of at least one peak of values of the collected metric data and of at least one peak of different shape or amplitude or duration of metric data and/or no peak. For example, such composite seasonality pattern may arise on one week and comprise a similar peak of metric data on weekdays and a peak of different shape and/or no peak on weekend days.

The real-time self-adjustable anomaly detection monitoring method according to the invention with a composite seasonality pattern recognition algorithm has a low computational cost, self-adjusts on real-time to new seasonality patterns and new "normal" behavior, is robust to local variations and calculates composite seasonality patterns with a reduced number of historical data.

The invention also relates to a computer program comprising instructions which, when the program is executed by a computer, cause the computer to carry out the steps of the method according to any one of the preceding claims.

The invention also relates to a monitoring module for monitoring a computing device, said computing device being characterized by metric data to be monitored, said monitoring module being configured to:

- collect metric data over a predetermined interval of time,

- detect a seasonality pattern of said metric data over said predetermined interval of time,

- determine an interval-specific model representing the detected seasonality pattern,

- calculate modelled data using said determined model and the collected metric data,

- compare the calculated modelled data with the collected metric data to calculate a score characterizing the difference between the calculated modelled data and the collected metric data,

- calculate an anomaly likelihood for each data of the collected metric data using the calculated score, said anomaly likelihood being the probability that the value of said data is an anomaly,

- detect an anomaly on a data when probability that the value of said data is an anomaly is greater than a predetermined threshold.

According to an embodiment, the monitoring module is configured to calculate the modelled data $\hat{y}_{t+1|t}$ at time (t+h) according to the following formula:

$$\hat{y}_{t+\mathrm{h}|t} = l_t + hb_t + s_{t+\mathrm{h}-m(k+1)}$$

where:

the level $l_t$ at time t is defined as:

$$l_t = \alpha(y_t - s_{t-m}) + (1 - \alpha)(l_{t-1} + b_{t-1})$$

the trend component $b_t$ at time t is defined as:

$$b_t = \beta^*(l_t - l_{t-1}) + (1 - \beta^*)b_{t-1}$$

the seasonality component is added as follow:

$$s_t = \gamma(y_t - l_{t-1} - b_{t-1}) + (1 - \gamma)s_{t-m}$$

Advantageously, the anomaly likelihood L is calculated as follows:

$$L = 1 - \frac{1}{2}\mathrm{erfc}\left(\frac{x - MN}{\sqrt{2} \times STD}\right)$$

where x is the mean of the n previous calculated scores, MN is the mean and STD is the standard deviation of the N previous calculated scores with N >> n.

Advantageously, the monitoring module is configured, when a seasonality pattern has been detected, for identifying said seasonality pattern.

In an embodiment, the monitoring module is configured, when detecting the seasonality pattern of said metric data over said predetermined interval of time, to retrieve a previously detected pattern or determine a new pattern.

In an embodiment, the seasonality pattern is a simple seasonality pattern consisting of a similar and periodically repeated pattern. In other words, the seasonality pattern is a periodic repetition of a similar peak of values of the data over the interval of time, for example a daily repetition.

In an embodiment, the seasonality pattern is a composite seasonality pattern comprising a combination of at least one peak of values of metric data and at least one peak of different shape or amplitude or duration of metric data or no peak. For example, such composite seasonality pattern may arise on one week and comprise a similar peak of metric data on weekdays and a peak of different shape and/or no peak on weekend days.

The invention also relates to a computing system comprising a monitoring module according to the preceding claim and a computing device, said computing device being characterized by metric data to be monitored.

In an embodiment, the device is a computer or a server or a cluster of computers and/or servers.

**[Brief description of the drawings]**

These and other features, aspects, and advantages of the present invention are better understood regarding the following Detailed Description of the Preferred Embodiments, appended Claims, and accompanying Figures, where:

Figure 1 illustrates an embodiment of the computing system according to the invention.

Figure 2 illustrates an example of a simple seasonality pattern.

Figure 3 illustrates an example of a composite seasonality pattern.

Figure 4 illustrates an example of a wavelet transform 2D map.

Figure 5 illustrates an embodiment of the method according to the invention.

**[Detailed description]**

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification. The inventive subject matter is not restricted except only in the spirit of the Specification and appended Claims. Those of skill in the art also understand that the terminology used for describing particular embodiments does not limit the scope or breadth of the invention. In interpreting the Specification and appended Claims, all terms should be interpreted in the broadest possible manner consistent with the context of each term. All technical and scientific terms used in the Specification and appended Claims have the same meaning as commonly understood by one of ordinary skill in the art to which this invention belongs unless defined otherwise. As used in the Specification and appended Claims, the singular forms "a", "an", and "the" include plural references unless the context clearly indicates otherwise. The verb "comprises", and its conjugated forms should be interpreted as referring to elements, components, or steps in a non-exclusive manner. The referenced elements, components or steps may be present, utilized or combined with other elements, components or steps not expressly referenced. The verb "couple" and its conjugated forms means to complete any type of required junction, including electrical, mechanical or fluid, to form a singular object from two or more previously non-joined objects. If a first device couples to a second device, the connection can occur either directly or through a common connector. "Optionally" and its various forms means that the subsequently described event or circumstance may or may not occur. The description includes instances where the event or circumstance occurs and instances where it does not occur. "Operable" and its various forms means fit for its proper functioning and able to be used for its intended use. Where the Specification or the appended Claims provide a range of values, it is understood that the interval encompasses each intervening value between the upper limit and the lower limit as well as the upper limit and the lower limit. The invention encompasses and bounds smaller ranges of the interval subject to any specific exclusion provided. Where the Specification and appended Claims reference a method comprising two or more defined steps, the defined steps can be carried out in any order or simultaneously except where the context excludes that possibility.

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

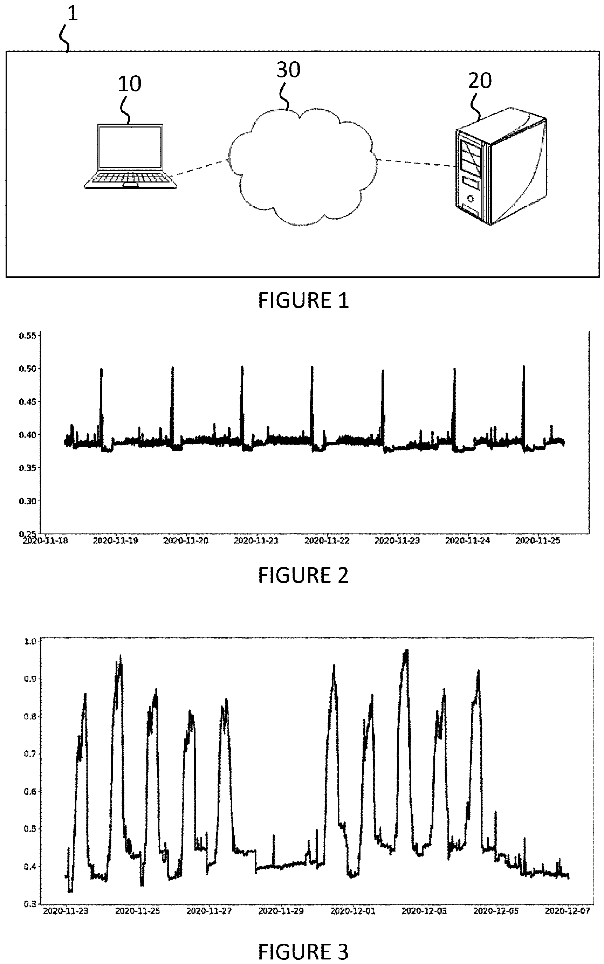

Figure 1 illustrates an example of the computing system 1.

The computing system 1 comprises a monitoring module 10 and a computing device 20.

The computing device 20 may be a computer or a server or a cluster of computers and/or servers.

The computing device 20 is characterized by one or more metric data to be monitored. For example, such metric data may be the total CPU consumption of the computing device 20, the memory usage of the computing device 20 or the number of applications running the computing device 20.

Metric data may be generated by an agent installed on the computing device 20, such as e.g., a Virtual Machine (VM) or similar, which collects values from variables of interest to analyze at regular or irregular time intervals. The agent may generate data that are or are not time equispaced with successive values. In the latter case, data may be transformed into an equispaced time-series by using mean, median, linear extrapolation and other techniques.

The monitoring module 10 allows to monitor the computing device 20. In the example of Figure 1, the monitoring module 10 monitors the computing device 20 through a communication network 30. However, in another embodiment, the monitoring module 10 could monitor the computing device 20 directly, through a direct communication link such as e.g., a cable. In the example of Figure 1, the monitoring module 10 is implemented on a laptop computer but could be operated by any adapted computing device.

The monitoring module 10 is configured to collect metric data over a predetermined interval of time.

The monitoring module 10 is configured to detect at least one seasonality pattern of said metric data over said predetermined interval of time.

The monitoring module 10 is configured to determine an interval-specific model representing the at least one detected seasonality pattern.

The monitoring module 10 is configured to calculate modelled data using said determined model and the collected metric data.

The monitoring module 10 is configured to compare the calculated modelled data with the collected metric data to calculate a score characterizing the difference between the calculated modelled data and the collected metric data.

The monitoring module 10 is configured to calculate an anomaly likelihood for each data of the collected metric data using the calculated score, said anomaly likelihood being the probability that the value of said data is an anomaly.

The monitoring module 10 is configured to detect an anomaly on a data when probability that the value of said data is an anomaly is greater than a predetermined threshold.

The monitoring module 10 is configured to realize the above-mentioned functions in an iterative manner.

The monitoring module 10 comprises at least one processor that can implement said above-mentioned functions.

**Example of operation**

An example of implementation of the method is described below in reference to figures 2 to 5.

The method is based on four main phases: data collection and transformation, seasonality check and calculation, data forecast and anomaly likelihood assessment. At the end of the anomaly likelihood assessment, one can decide to leave the system, or continue it in a loop, going back to the data collection and transformation step.

The method is described thereafter for on iteration N at time t+1.

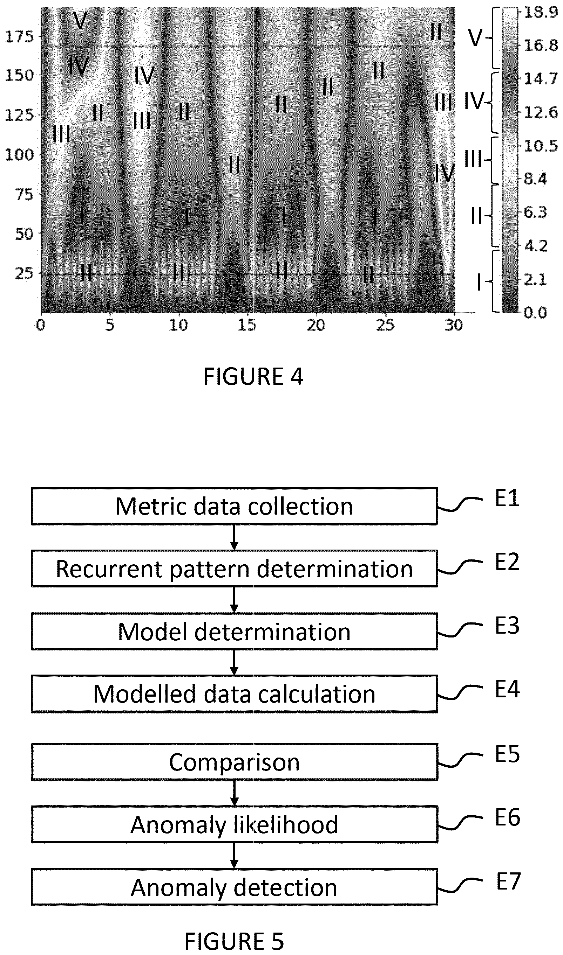

In reference to Figure 5, in a step E1, the monitoring module 10 collects metric data characterizing the computing device 20 over a predetermined interval of time, called time-series. Said predetermined interval of time depends on the type of metric data. For example, the predetermined interval of time may be a minute, an hour, a day or a week or a month.

In a step E2, the monitoring module 20 determines at least one seasonality pattern of said metric data over said predetermined interval of time. The determination of a seasonality pattern allows the monitoring module 20 to select the optimum forecasting model as described hereafter.

If a seasonality pattern has been previously determined (i.e., in a previous iteration) and stored in a memory zone accessible to the monitoring module 10, the monitoring module 10 may retrieved said stored seasonality pattern from said memory zone. Also, extra information may be retrieved, such as the time of the last seasonality pattern determination.

If a seasonality pattern has never been determined for the metric of interest or if a seasonality pattern has been determined a long time ago or many iterations k ago (k>N, where N is the maximum number of iterations before considering a determined seasonality pattern as being outdated), then a seasonality pattern identification routine is activated.

The seasonality pattern identification routine is applied to a time-series tracking the metric of interest (e.g.,

CPU utilization, memory usage, network traffic, database transactions, etc.) to establish the presence of simple or composite seasonality patterns.

An example of a simple seasonality pattern is illustrated on Figure 2, where time (dates) is on the X-axis (abscissa) and memory usage is on the Y-axis (ordinate). A simple seasonality pattern is a similar pattern (i.e., in shape, amplitude and duration) that is repeated periodically, for example daily in the example of Figure 2.

Figure 3 shows an example of a composite seasonality pattern, where time (dates) is on the X-axis (abscissa) and memory usage is on the Y-axis (ordinate). A composite seasonality pattern is a combination of simple patterns and at least one other pattern or absence of pattern over a defined period of time. In the example of Figure 3, the metric observed shows daily simple patterns during the weekdays and no activity during the weekend. A composite seasonality pattern could be described as one simple pattern that repeats every week. However, defining a composite seasonality pattern ("weekdays-weekend" in the example of Figure 3) allows to use recognition algorithms that can detect such pattern in a shorter time interval than the ones requested to find a simple seasonality pattern (at least twice the unit of time). This description of the simple and composite seasonality patterns can be extended to shorter or longer time units (hours, days, weeks, months, etc.).

If the time-series of metric data acquired in step E1 contains enough data to perform simple pattern recognition, then step E2 may be achieved successfully. For example, if a daily pattern needs to be identified, at least two days of data are needed. If there is not enough data, seasonality pattern cannot be assigned. The simple pattern recognition may be performed by employing a discrete 1-D Fourier transform on the time-series of metric data, and by analyzing the resultant frequency-domain spectrum. For example, if a daily pattern is present, a peak with a large magnitude at the frequency corresponding to one day will be present and detected in step E2. Otherwise, no seasonality pattern can be assigned to the time-series.

Composite seasonal patterns also exhibit large magnitude peaks as simple seasonality patterns. For example, the weekdays-weekend composite seasonality pattern illustrated on Figure 3 shows a large magnitude peak at around the frequency corresponding to one day, as its simple seasonality pattern counterpart (the daily seasonality pattern of Figure 2). To distinguish between a simple or composite seasonality pattern, a composite seasonality pattern recognition algorithm may be used, if enough data is present. In the example of the weekdays-weekend composite pattern, at least seven days of data are needed. In the case in which the weekdays-weekend composite seasonality pattern is considered as a simple weekly pattern, a minimum of 14 days of data are needed. The composite pattern recognition thus allows one to reduce by half the minimum amount of data requested.

The composite seasonality pattern recognition algorithm may analyze the evolution of the simple seasonality patterns in time by using continuous wavelet transform. Wavelet functions such as Mexican hat or Gaussian may be used for the analysis. By fixing the frequency at a certain value (e.g., the frequency corresponding to one day), the monitoring module 10 may trace how the respective Fourier peaks evolves in time. For example, to identify the composite weekdays-weekend pattern, the monitoring module 10 may analyze the frequency-time 2D wavelet transform map as shown on Figure 4 (where time (days) is on the X-axis (abscissa) and FT peak frequency converted to hours is on the Y-axis (ordinate)) and focus on the cross-section with a frequency corresponding to one day. Statistical quantities such as mean, median, or standard deviation are further evaluated within a moving window on this cross-section. If the moving statistical quantities lie outside the interval defined by dynamically updated lower and upper thresholds, then the composite weekdays-weekend pattern is assigned to the time series of interest.

For example, thresholds may be chosen according to the null hypothesis rejection procedure, e.g., by imposing a confidence level of 97% or higher. Null hypothesis rejection is a standard procedure used in statistics. Dynamic thresholds may be a Z-score chosen on a certain level, where the statistical measure of the distance of a certain observation forms the mean of a set of data. For example, using properties of normal distribution Z-score equal to 3 means statistically that 99,7% of observations lie within the chosen thresholds.

Both simple and composite seasonality pattern recognition algorithm may improve their results by increasing the size of the historical metric data obtained in step E1.

In a step E3, the monitoring module 10 defines the time-series modelling method and parameters once the seasonality pattern of the time-series of metric data has been established (no seasonality pattern, simple seasonality pattern or composite seasonality pattern).

One of models that may be used is the exponential smoothing Holt-Winters additive model with level ($l_t$) and trend ($b_t$) components. Seasonality components, if the time-series exhibit a seasonality pattern, may be added.

The modelled data $\hat{y}_{t+1}$, evaluated at time t + 1, can be calculated as follows:

$$\hat{y}_{t+1|t} = l_t + b_t + s_{t+1-m(k+1)}$$

where the level component at time t, $l_t$, is defined as:

$$l_t = \alpha(y_t - s_{t-m}) + (1 - \alpha)(l_{t-1} + b_{t-1})$$

and the trend component at time t, $b_t$:

$$b_t = \beta^*(l_t - l_{t-1}) + (1 - \beta^*)b_{t-1}$$

Seasonality component is added as follow:

$$s_t = \gamma(y_t - l_{t-1} - b_{t-1}) + (1 - \gamma)s_{t-m}$$

Where $\alpha$ is a level coefficient, $\beta$ is a trend coefficient, $\gamma$ is a season coefficient, and $s_{t-m}$ is the seasonal component.

Those coefficients may be calculated in a known manner by optimization techniques, such as, for example, grid search, least squares optimization, local search, etc.

Metric data collected in step E1 may be used, after step E2, to obtain a set of optimized parameters to be used in the modelling phase. The step E3 of data modelling is not restricted to exponential smoothing based techniques and may be performed by other forecast techniques such as ARIMA or Neural Networks.

In the modelling phase, at each iteration, observations (collected metric data) are collected at t+1 with value $y_{t+1}$. The time step (t, t+1) may be constant for all measurements. If that is not the case, a resampling procedure may be needed to ensure equal time space between measurements.

Historical time-series of metric data may be used to optimize the parameters of the chosen model. Then, the model is applied to the same [t; t+1] interval to calculate the modelled data $\hat{y}_{t+1}$.

At the end of the data modelling, the model components for level (/), trend (b) and season (s) are re-optimized according to the observation received in the t-f time window.

At this point, the window can be moved, and observation are collected from time t+1 to time t+2 for further modelling. Also, the coefficients for level (a), trend ($\beta$) and season ($\gamma$), may be re-optimized to ensure that data modelling is constantly up to date if model performances decrease over time.

The model may be self-adjusted at each time step with new measurements, ensuring fast adaptation. The use of a moving window may reduce the computational effort. A moving window is defined as a time window of N time steps. Optimization of the model and calculation of the model data are done for each time step, but the model is saved only at the end of the moving window.

In the limit in which the moving window is reduced to a single step size, one may obtain real-time results (model data $\hat{y}_t$).

In a step E4, the monitoring module 10 calculates modelled data using the equation:

$\hat{y}_{t+1|t} = l_t + b_t + s_{t+1-m(k+1)}$ using the model coefficients determined in step E3 and the metric data collected in step E1.

In a step E5, the monitoring module 10 compares the calculated modelled data with the collected metric data to calculate a score characterizing the difference between the calculated modelled data and the collected metric data.

A score may be defined from the observed data, $y_t$, and the modelled ones, $\hat{y}_t$. The score may be defined to be equivalent to the residuals, namely the difference between $\hat{y}_t$, and yt, but other functions may be defined, such as the positive residuals (if residual is negative, score is zero, otherwise is equal to the residual)), the square root of residuals, or others.

In a step E6, the monitoring module 10 calculates the anomaly likelihood for each data of the collected metric data using the N last calculated scores.

From the score, the monitoring module 10 calculates the likelihood L of $y_t$ to be an anomaly from the Q-function:

$$L = 1 - Q\left(\frac{x - MN}{STD}\right)$$

where mean (MN) and standard deviation (STD) are calculated from the last N scores, and x is the mean of the last n score, where N » n,

$$Q(z) = \frac{1}{2}\operatorname{erfc}\left(\frac{z}{\sqrt{2}}\right)$$

And

$$z = \frac{x - MN}{STD} \quad .$$

The anomaly likelihood assessment, thanks to the use of rolling windows of size N and n for the scores, where N » n, allows the system to dynamically adjust to new behaviours of IT operational metric values but at the same time making it robust to noise. Robustness and adjustability may be modified by changing N and n. If N decreases, the anomaly likelihood assessment adjusts better to quick changes of the measured data (for example, change of trend or pattern) but it will be less robust to data noise. If N increases too much, the model may become very robust but also less precise in recognizing anomalies. Similarly for n: for very small n, the model may become very sensitive and recognize noise as anomaly, while for very large n, the model may not be able to recognize anomalies. For these reasons, n may be set between 1 and a few tens of points, while N may be at least 2 orders of magnitude larger. The exact choice of n and N depends on the frequency of the collected data and the requested responsiveness of the model. For example, if data are collected each second and the model must recognize changes of behaviour occurring in a few seconds, the size of n has to be very small (not spanning data for more than a few seconds). However, if the model must react to changes occurring in hours, n has to be increased to include data on a larger time scale (hour). Accordingly, N has to be adjusted to be at least 2 orders of magnitude larger than n.

In a step E7, the monitoring module 20 detects an anomaly on a data when the probability that the value of said data is an anomaly is greater than a predetermined threshold. Historical scores may advantageously be used for calculating the likelihood of a value of the time-series to be an anomaly. If there are not enough score points, likelihood may be irrelevant.

## Claims

1. An iterative method for monitoring a computing device (20), said computing device (20) being **characterized by** metric data to be monitored, said iterative method comprising the steps, for each iteration, of:

   - collecting (E1) metric data over a predetermined interval of time,
   - detecting (E2) a seasonality pattern of said metric data over said predetermined interval of time,
   - determining (E3) an interval-specific model representing the detected seasonality pattern,
   - calculating (E4) modelled data using said determined model and the collected metric data,
   - comparing (E5) the calculated modelled data with the collected metric data to calculate a score characterizing the difference between the calculated modelled data and the collected metric data,
   - calculating (E6) an anomaly likelihood for each data of the collected metric data using the calculated score, said anomaly likelihood being the probability that the value of said data is an anomaly,
   - detecting (E7) an anomaly on a data when probability that the value of said data is an anomaly is greater than a predetermined threshold.

2. The method according to claim 1, wherein the modelled data $\hat{y}_{t+h|t}$ is calculated (E4) at time (t+h) according to the following formula:

$$\hat{y}_{t+h|t} = l_t + hb_t + s_{t+h-m(k+1)}$$

   where:

   - the level $l_t$ at time t is defined as:

$$l_t = \alpha(y_t - s_{t-m}) + (1 - \alpha)(l_{t-1} + b_{t-1})$$

where a is a level coefficient,
- the trend component $b_t$ at time t is defined as:

$$b_t = \beta^*(l_t - l_{t-1}) + (1 - \beta^*)b_{t-1}$$

where $\beta$ is a trend coefficient,
- the seasonality component is added as follow:

$$s_t = \gamma(y_t - l_{t-1} - b_{t-1}) + (1 - \gamma)s_{t-m}$$

where $\gamma$ is a season coefficient.

3. The method according to any one of the preceding claims, wherein the score deviates from the mean of the N previous calculated scores when the anomaly-likelihood function L is below a predetermined threshold, where:

$$L = 1 - \frac{1}{2}\text{erfc}\left(\frac{x - MN}{\sqrt{2} \times STD}\right)$$

and where x is the mean of the n previous calculated scores with N» n, MN is the mean of the N previous calculated scores and STD is the standard deviation of the N previous calculated scores.

4. The method according to any one of the preceding claims, wherein the step (E2) of detecting the seasonality pattern of said metric data over said predetermined interval of time comprises retrieving a previously detected pattern or in determining a new pattern.

5. The method according to any one of the preceding claims, wherein the seasonality pattern is a simple seasonality pattern which is a similar periodically repeated pattern.

6. The method according to the preceding claim, wherein the seasonality pattern comprises a combination of at least one peak of values of the collected metric data and of at least one peak of different shape or amplitude or duration and/or no peak.

7. A computer program comprising instructions which, when the program is executed by a computer, cause the computer to carry out the steps of the method according to any one of the preceding claims.

8. A monitoring module (10) for monitoring a computing device (20), said computing device (20) being **characterized by** metric data to be monitored, said monitoring module (10) being configured to:

   - collect metric data over a predetermined interval of time,
   - detect a seasonality pattern of said metric data over said predetermined interval of time,
   - determine an interval-specific model representing the detected seasonality pattern,
   - calculate modelled data using said determined model and the collected metric data,
   - compare the calculated modelled data with the collected metric data to calculate a score characterizing the difference between the calculated modelled data and the collected metric data,
   - calculate an anomaly likelihood for each data of the collected metric data using the calculated score, said anomaly likelihood being the probability that the value of said data is an anomaly,
   - detect an anomaly on a data when probability that the value of said data is an anomaly is greater than a predetermined threshold.

9. A computing system (1) comprising a monitoring module (10) according to the preceding claim and a computing device (20), said computing device (20) being **characterized by** metric data to be monitored.

10. A computing system (1) according to the preceding claim, wherein the device (20) is a computer or a server or a cluster of computers and/or servers.

FIGURE 1

FIGURE 2

FIGURE 3

FIGURE 4

| Metric data collection | E1 |
| Recurrent pattern determination | E2 |
| Model determination | E3 |
| Modelled data calculation | E4 |
| Comparison | E5 |
| Anomaly likelihood | E6 |
| Anomaly detection | E7 |

FIGURE 5

Europäisches
Patentamt

European
Patent Office

Office européen
des brevets

# EUROPEAN SEARCH REPORT

Application Number

EP 22 30 5701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 467 661 A1 (SERVICENOW INC [US]) 10 April 2019 (2019-04-10) <br> * abstract * <br> * figures 1,3,4,13 * <br> * paragraph [0002] * <br> * paragraph [0004] – paragraph [0008] * <br> * paragraph [0015] – paragraph [0020] * <br> * paragraph [0055] – paragraph [0067] * <br> * paragraph [0077] – paragraph [0081] * <br> * paragraph [0094] – paragraph [0097] * <br> * paragraph [0110] * <br> ----- | 1-10 | INV. <br> G06F11/00 <br> G06F11/34 <br><br> ADD. <br> G06F11/30 |
| X | US 2021/144164 A1 (MATHUR KESHAV [US] ET AL) 13 May 2021 (2021-05-13) <br> * abstract * <br> * figures 17A,19,37-40,42,45 * <br> * paragraph [0003] – paragraph [0004] * <br> * paragraph [0129] – paragraph [0132] * <br> * paragraph [0178] * <br> * paragraph [0217] – paragraph [0224] * <br> * paragraph [0251] – paragraph [0252] * <br> * paragraph [0270] – paragraph [0271] * <br> * paragraph [0305] – paragraph [0327] * <br> ----- | 1,8-10 | |

TECHNICAL FIELDS
SEARCHED      (IPC)

G06F

The present search report has been drawn up for all claims

| Place of search | Date of completion of the search | Examiner |
|---|---|---|
| Munich | 4 October 2022 | Lanchès, Philippe |

EPO FORM 1503 03.82 (P04C01)

**ANNEX TO THE EUROPEAN SEARCH REPORT
ON EUROPEAN PATENT APPLICATION NO.**

EP 22 30 5701

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2022

| Patent document cited in search report | | Publication date | Patent family member(s) | | Publication date |
|---|---|---|---|---|---|
| EP 3467661 | A1 | 10-04-2019 | EP | 3467661 A1 | 10-04-2019 |
| | | | US | 2019102276 A1 | 04-04-2019 |
| | | | US | 2020250066 A1 | 06-08-2020 |
| US 2021144164 | A1 | 13-05-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10635563 B2

- US 20200258005 A1